# FASCICULE DE BREVET EUROPEEN

(11) **EP 3 048 878 B1**
(45) Date de publication et mention de la délivrance du brevet: **21.06.2017**
(21) Numéro de dépôt: 14786969.7
(22) Date de dépôt: 20.08.2014
(51) Int. Cl.: A01K 41/06, A01K 45/00

(54) **DISPOSITIF DE REORIENTATION D'UN OEUF DANS UN ALVEOLE DE PLATEAU**
VORRICHTUNG ZUR NEUAUSRICHTUNG EINES EIS IN EINER ZELLULAREN SCHALE
DEVICE FOR REORIENTATION OF AN EGG IN A CELLULAR TRAY

(30) Priorité: 24.09.2013 FR 1359201
(43) Date de publication de la demande: 03.08.2016
(73) Titulaire: Egg-Chick Automated Technologies, 29400 Landivisiau (FR)
(72) Inventeur: ADJANOHOUN, Ephrem, 35740 Pace (FR); MENGUY, Florent, 29200 Brest (FR)
(74) Mandataire: Novagraaf Technologies
(86) Numéro de dépôt international: PCT/FR2014/052104
(87) Numéro de publication internationale: WO 2015/044547

(56) Documents cités:
- WO-A1-98/14052
- WO-A2-02/082890

## Description

### Domaine technique

Dans l'industrie avicole, les oeufs sont souvent mis dans des alvéoles ou des plateaux munis d'alvéoles. Ces plateaux et alvéoles sont manipulés par des moyens automatisés et les mouvements de ces derniers entraînent des mouvements de l'oeuf dans le plateau ou l'alvéole, qui décale l'axe de l'oeuf par rapport à la verticale. La présente invention concerne un dispositif de réorientation ou de repositionnement d'oeufs disposés dans les alvéoles d'un plateau par rapport à un axe déterminé, en général l'axe vertical. L'invention trouve plus particulièrement une application dans les machines destinées à manipuler ou à travailler sur les oeufs, comme les machines d'injection de substance dans les oeufs qui nécessitent que les oeufs soient en position bien verticale.

### Etat de la technique

Il est connu d'injecter des substances de traitement, telles que des vaccins, des antibiotiques ou des vitamines, dans les oeufs fécondés afin d'optimiser la qualité et/ou le développement des embryons. Il est également connu d'injecter des substances dans des oeufs vivants pour fabriquer des vaccins pour l'homme. Il peut être également nécessaire d'introduire dans l'oeuf des outils pour son observation ou pour en retirer du contenu ou plus simplement pour y effectuer des manipulations simple ou complexes.

Les machines effectuant ces opérations sont généralement configurées pour entrer en contact ou percer l'oeuf selon différents angles d'approche mais le positionnement de l'oeuf, idéalement le long de son axe vertical, assure que son contenu interne soit disposé de façon prédictible et permette ainsi de faire la manipulation désirée avec la plus grande probabilité de réussite possible. Les oeufs à traiter sont généralement disposés dans un plateau comprenant une pluralité d'alvéoles, chaque oeuf étant positionné dans une alvéole du plateau, la pointe de l'oeuf étant généralement orientée vers le bas. Le fond des alvéoles du plateau étant généralement ouvert, les oeufs peuvent être percés par le haut ou par le bas ou selon n'importe quel angle mais leur position verticale assure une disposition prédictible des composants ou annexes contenus dans l'oeuf. En effet, le contenu de l'oeuf, qui est principalement liquide, contient des composants ou annexes évoluant au cours du temps et se déplaçant soit passivement par gravite, soit activement (contractions de l'embryon) pour adopter une position prédictible selon la position de l'oeuf.

Dans l'exemple de la machine d'injection, l'aiguille peut pénétrer dans l'oeuf par l'extrémité la plus arrondie de celui-ci (ou "gros bout" de l'oeuf) ou par un côté de l'oeuf. Tout dépend de l'endroit où doit être injectée la substance. Par exemple, si on souhaite injecter de la substance dans les liquides chorioallantoïques de l'oeuf, l'injection de fera par le haut (extrémité la plus arrondie). Elle peut aussi se faire par le coté si l'on souhaite introduire une matière dans une des annexes embryonnaires non accessibles par le haut. Dans tous les cas, c'est le positionnement de l'axe longitudinal de l'oeuf par rapport à la verticale qui permet de prévoir le positionnement anatomique de telle ou telle composant ou annexe embryonnaire de l'oeuf.

L'injection ou la manipulation peut être effectuée à n'importe quel moment avant, pendant ou après l'incubation.

Classiquement, les machines sont réglées pour manipuler ou traiter des oeufs dont l'axe longitudinal est sensiblement vertical. Or, il arrive fréquemment que certains oeufs ne soient pas positionnés correctement dans les alvéoles du plateau et aient leur axe longitudinal qui soit incliné par rapport à la verticale. Cela peut être dû à différents facteurs, et notamment au fait que, pendant leur incubation, les plateaux d'oeufs sont régulièrement inclinés, généralement plusieurs fois par jour. En pratique, les plateaux sont d'abord positionnés à +45° par rapport à la verticale pendant une demi-journée puis -45° par rapport à la verticale pendant la demi-journée suivante et ainsi de suite. Le mauvais positionnement des oeufs peut aussi résulter de la manipulation des plateaux chargés d'oeufs ou du transfert des oeufs d'un contenant vers un autre. Le mouvement des plateaux ou des ventouses de préhension, peut alors désaxer certains des oeufs disposés dans les alvéoles du plateau. Il est donc nécessaire de redresser ou repositionner les oeufs avant leur manipulation ou leur traitement.

Dans l'art antérieur actuel, il existe peu d'outils efficaces pour redresser les oeufs.

La demande de brevet WO 2009/094204 décrit un dispositif destiné à réorienter les oeufs dans un plateau d'incubation, ledit dispositif comprenant un mécanisme à vibration destiné à transmettre un mouvement vibratoire au plateau et aux oeufs qu'il contient en espérant que ces derniers s'orientent selon un axe sensiblement vertical. Un tel procédé ne fonctionne pas toujours correctement car la nature du plateau et les frottements ne permettent pas de remettre les oeufs dans l'axe sans guidage. Le document WO-A-02/082890 divulgue un dispositif similaire.

### Résumé de l'invention

L'invention a pour but de proposer une autre solution pour réorienter les oeufs disposés dans un plateau.

L'invention a également pour but de proposer une solution permettant de réorienter les oeufs selon un axe sensiblement vertical sans changer de plateau.

La présente invention a pour objet un dispositif de réorientation d'oeufs disposés dans les alvéoles creuses d'un plateau et ouvertes par le bas, ledit dispositif étant destiné à réorienter au moins un oeuf dudit plateau selon un axe sensiblement vertical. Selon l'invention, le dispositif comprend au moins un élément de réorientation apte à se déplacer entre une position basse et une position haute relativement à l'alvéole comprenant l'oeuf à réorienter, ledit élément de réorientation comprenant une embase inférieure sur laquelle sont fixées des tiges dressées dont les extrémités supérieures sont écartables les unes par rapport aux autres au contact de l'oeuf à réorienter, les tiges dressées étant destinées à s'interposer, entre l'alvéole et l'oeuf, en position haute, pour amorcer et guider un mouvement de l'oeuf sous l'effet de son poids vers une position sensiblement verticale.

Ainsi, selon l'invention, l'oeuf glisse naturellement entre les extrémités supérieures des tiges de l'élément de réorientation pour retrouver un axe longitudinal sensiblement vertical. La réorientation de l'oeuf est initiée par les extrémités supérieures des tiges qui écartent l'oeuf de l'alvéole. L'oeuf se remet ensuite en position sensiblement verticale sous l'effet de son propre poids.

Selon un mode de réalisation, les tiges dressées sont flexibles, l'embase inférieure étant flexible ou non. Les tiges se déforment et se courbent au contact de l'oeuf lorsque l'élément de réorientation est déplacé de sa position basse vers sa position basse.

Selon un autre mode de réalisation, l'embase inférieure est réalisée en un matériau flexible ou élastique, donc déformable. Les tiges peuvent alors être rigides ou flexibles. Dans ce mode de réalisation, c'est l'embase qui se déforme lorsque les tiges sont en contact avec l'oeuf. Les tiges s'écartent au contact de l'oeuf. Selon un exemple de réalisation, l'embase inférieure est réalisée en silicone.

En variante, l'embase inférieure comprend un mécanisme d'articulation des parties inférieures des tiges permettant aux extrémités supérieures de s'écarter lorsqu'un oeuf est en contact avec les tiges.

Selon un mode de réalisation particulier, les tiges sont disposées de façon à former une forme de cône ou d'entonnoir, une fois les tiges écartées au contact de l'oeuf facilitant son glissement vers l'axe vertical.

Avantageusement, les tiges sont conformées pour venir au contact avec la coquille de l'oeuf en un ou deux points de contact, ou en un nombre réduit de points de contact, de manière à réduire les zones de frottement potentiel et à optimiser le glissement de l'oeuf entre les tiges.

Selon un mode de réalisation particulier, les tiges présentent une boucle à leur extrémité supérieure, les tiges étant au contact de la coquille d'oeuf par l'intermédiaire desdites boucles.

En variante, les tiges présentent à leur extrémité supérieure une boule ou un renflement conique similaire à une boucle ou une boule, les tiges étant au contact de la coquille d'oeuf par l'intermédiaire desdites boules. La forme de la boule ou du renflement est conçue de telle sorte que son contact avec l'oeuf soit réduit au minimum, de préférence à un seul point de contact pour réduire les frottements.
Selon un mode réalisation particulier, l'élément de réorientation comporte n tiges avec n≥3, les extrémités inférieures desdites tiges étant disposées et fixées à l'embase inférieure selon un polygone équilatéral.

Dans un premier exemple de réalisation, l'élément de réorientation comporte trois tiges dont les extrémités inférieures sont disposées et fixées à l'embase inférieure selon un triangle équilatéral. Selon un autre exemple, l'élément de réorientation comporte quatre tiges dont les extrémités inférieures sont disposées et fixées à l'embase inférieure aux quatre coins d'un carré. Selon un mode de réalisation particulier, l'extrémité inférieure des tiges est moulée dans l'embase inférieure.

Selon un mode de réalisation, les tiges comportent une extrémité supérieure conformée pour glisser dans l'alvéole lors du déplacement vers le haut ou vers le bas de l'embase inférieure. La boucle ou la boule en extrémité de tige permet un tel glissement.

Selon un mode de réalisation, le dispositif étant destiné à réorienter les oeufs d'un plateau comportant n alvéoles creuses organisées en rangées, ledit dispositif comporte n éléments de réorientation, chaque élément de réorientation étant destiné à réorienter un oeuf du plateau.

### Brève description des figures

D'autres avantages pourront encore apparaître à l'homme du métier à la lecture des exemples ci-dessous, illustrés par les figures annexées, donnés à titre illustratif:
- La figure 1 est une vue en perspective d'un élément de réorientation conforme à l'invention;
- La figure 2 est une vue de coté de l'élément de réorientation de la figure 1;
- La figure 3 est une vue de dessus de l'élément de réorientation de la figure 1; et
- Les figures 4a à 4d illustrent le déplacement de l'élément de réorientation de la figure 1 pour réorienter un oeuf disposé dans une alvéole d'un plateau d'oeuf.

### Description détaillée d'au moins un mode de réalisation de l'invention

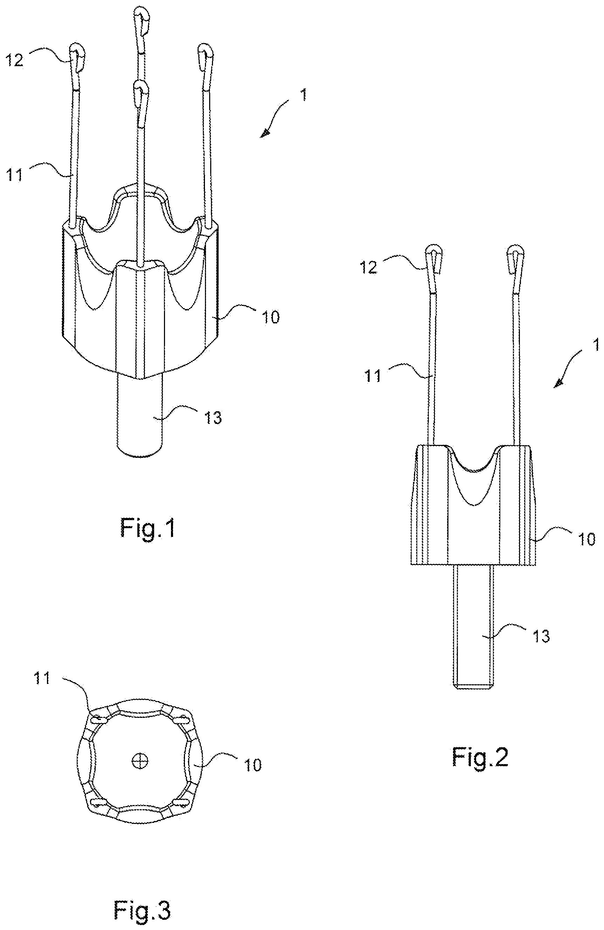

Selon l'invention, le dispositif de réorientation d'oeufs disposés dans les alvéoles d'un plateau comporte au moins un élément de réorientation 1 tel qu'illustré aux figures 1 à 3. Cet élément de réorientation est apte à se déplacer d'une position basse vers une position haute et d'une position haute vers une position basse relativement aux alvéoles du plateau. Ce déplacement de l'élément de réorientation 1 est réalisé par des moyens de déplacement appropriés, par exemple par des moyens de déplacement pneumatique ou mécaniques.

En référence aux figures 1 à 3, l'élément de réorientation 1 comporte une embase inférieure 10 sur laquelle sont fixées des tiges dressées ou barbules 11 dont les extrémités supérieures sont écartables les unes par rapport aux autres au contact de l'oeuf à réorienter. Ces barbules sont destinées à s'interposer entre l'oeuf et le plateau lorsque l'élément de réorientation est en position haute pour amorcer et guider un mouvement de l'oeuf sous l'effet de son poids vers une position sensiblement verticale. On entend par position verticale de l'oeuf une position de l'oeuf dans laquelle l'axe longitudinal de l'oeuf (passant par l'extrémité pointue et l'extrémité arrondie de l'oeuf) est sensiblement vertical.

Ainsi, lorsque l'élément de réorientation est en position haute, l'oeuf est écarté de l'alvéole par les extrémités supérieures des barbules puis glisse, sous l'effet de son propre poids, entre ces dernières et/ou le long de ces dernières (forme en cône ou en entonnoir) pour retrouver un axe longitudinal sensiblement vertical.

Dans l'exemple de réalisation des figures 1 à 3, l'élément de réorientation comporte quatre barbules 11 disposées aux quatre coins d'un carré.

De manière plus générale, l'élément de réorientation peut comporter n barbules, avec n≥3, les extrémités inférieures des barbules étant disposées et fixées à l'embase inférieure selon un polygone équilatéral.

Pour que les barbules 11 puissent s'écarter les unes par rapport aux autres au contact de l'oeuf, on utilise des barbules 11 flexibles ou une embase 10 en matériau flexible ou les deux à la fois.

Les barbules sont par exemple des tiges métalliques et l'embase est par exemple réalisée en silicone. L'extrémité inférieure des barbules 11 est moulée dans l'embase 10 en silicone. Dans ce cas, lorsque les barbules entrent en contact avec l'oeuf, elles s'écartent les unes par rapport aux autres en se courbant légèrement et/ou en se déplaçant dans l'embase.

Selon un mode de réalisation, au lieu d'utiliser des barbules flexibles moulées dans un matériau déformable ou non, on pourrait envisager que l'embase inférieure comprenne un mécanisme d'articulation des extrémités inférieures des tiges permettant aux extrémités supérieures de s'écarter lorsqu'un oeuf est en contact avec les tiges.

Pour favoriser le glissement de l'oeuf entre les barbules 11, une boucle 12 est prévue à l'extrémité supérieure de chacune des barbules 11. Cette boucle a pour avantage de ne pas être agressif sur l'oeuf. Elle permet également de réduire le frottement avec l'oeuf et limiter le nombre de points de contact entre l'oeuf et la barbule.

En variante, l'extrémité supérieure de chaque barbule peut comporter une boule en métal ou en un matériau approprié pour optimiser le glissement de l'oeuf sur la boule. La boule peut par exemple être réalisée en céramique.

L'embase 10 est creusée en son centre pour éviter que la pointe de l'oeuf ne vienne à son contact lorsque les barbules 11 sont écartées. En variante, on pourrait concevoir une embase non creusée dans laquelle la longueur des barbules et leur écartement sont définis pour que l'oeuf, quels que soient sa taille et son poids, ne vienne pas en contact avec l'embase lorsque les barbules sont écartées.

L'embase 10 est par ailleurs munie d'une tige, dite de liaison 13, pour relier l'élément de réorientation 1 à des moyens de déplacement vertical destinés à déplacer l'élément de réorientation entre une position basse et une position haute. Cette tige de liaison 13 est par exemple une tige filetée destinée à venir se visser sur une plaque déplaçable par un vérin pneumatique.

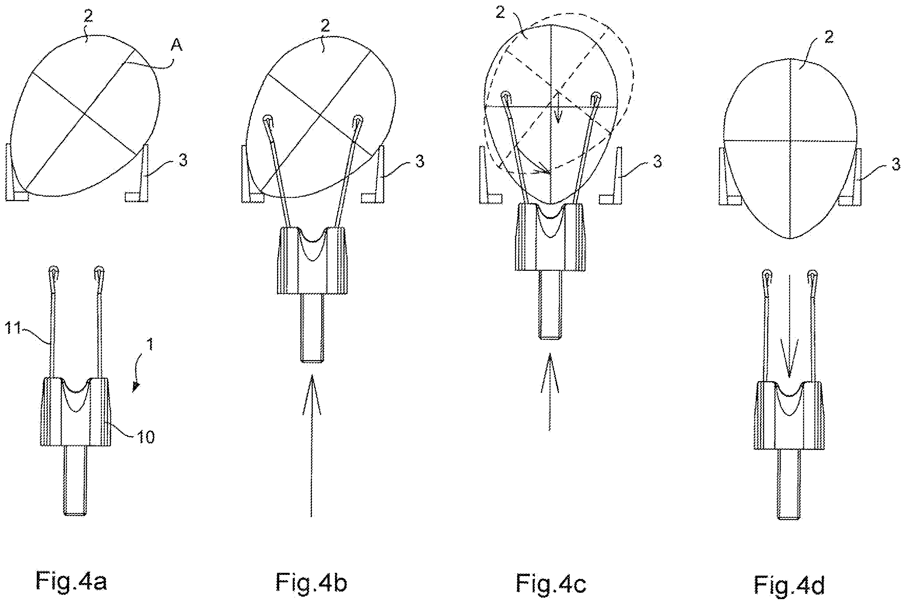

Les figures 4a à 4d illustrent l'opération de réorientation d'un oeuf au moyen de l'élément de réorientation 1. L'oeuf, référencé 2, est disposé dans un alvéole 3 d'un plateau d'oeufs.

Avant réorientation, l'axe longitudinal A de l'oeuf est incliné par rapport à la verticale comme illustré à la figure 4a. L'oeuf 2 repose sur les parois de l'alvéole 3. L'élément de de réorientation 1 est en position basse.

Pour réorienter l'oeuf 2, on déplace l'élément de réorientation 1 de la position basse vers une position comme illustré par la figure 4b. Les barbules 11 viennent alors s'interposer entre l'oeuf 2 et les parois de l'alvéole 3. Au contact de l'oeuf, les extrémités supérieures des barbules 11 s'écartent les unes par rapport aux autres puis soulèvent l'oeuf 2.

L'oeuf 2 n'est plus en contact ou présente un contact réduit avec les parois de l'alvéole 3 et glisse sous l'effet de son poids vers une position sensiblement verticale comme illustré par la figure 4c. L'axe longitudinal A de l'oeuf est alors sensiblement vertical.

L'élément de réorientation 1 revient ensuite en position basse comme illustré par la figure 4d.

L'oeuf 2 redressé redescend alors jusqu'à reposer sur les parois de l'alvéole 3. La conformation en boucle de l'extrémité supérieure des barbules permet à la fois de favoriser le glissement de l'oeuf entre les barbules et le glissement des barbules contre les parois de l'alvéole si celles-ci sont amenées à venir en contact les parois de l'alvéole lors du déplacement vers le haut ou le bas de l'élément de réorientation.

L'opération de réorientation des oeufs peut être réalisée sur des plateaux ouverts au moins sur le bas, cette ouverture étant classiquement prévue pour favoriser la circulation de l'air chaud autour des oeufs lors des opérations d'incubation.

L'opération de réorientation peut être réalisée avant une opération d'injection de substance de traitement dans les oeufs ou avant une opération de mirage des oeufs. Dans ce dernier cas, il peut en effet être intéressant de repositionner verticalement l'oeuf pour faciliter la détection d'embryons par traitement d'images ou autre traitement.

D'une manière générale, l'élément de réorientation 1 doit comporter au moins trois barbules 11 disposés selon un triangle équilatéral ou selon un polygone équilatéral pour soulever l'oeuf et l'écarter du plateau lorsque l'élément de réorientation est déplacé de la position basse vers la position haute.

La présence de boucles ou de boules aux extrémités supérieures des barbules 11 permet d'avoir un contact non agressif avec l'oeuf et limiter le nombre de points de contact entre l'oeuf et chacune des barbules. De préférence, l'extrémité supérieure de la barbule est conformée, par la présence d'une boucle ou d'une boule, pour qu'il y ait un seul point de contact entre l'oeuf et chacune des barbules, et cela afin de favoriser le glissement de l'oeuf.

Il est à noter que la vitesse de montée, et accessoirement la vitesse de redescente, de l'élément de réorientation est de préférence élevée pour que l'impulsion communiquée à l'oeuf soit suffisante pour faciliter son repositionnement et sa redescente à la verticale.

Pour réorienter les oeufs de l'ensemble d'un plateau, le dispositif comporte avantageusement une pluralité d'éléments de réorientation 1. Ces éléments de réorientation sont disposés les uns par rapport aux autres en rangées comme les oeufs dans les alvéoles du plateau. Si le plateau comporte n alvéoles, le dispositif peut comprendre n éléments de réorientation ou alors un nombre inférieur correspondant au nombre d'oeufs dans une ou plusieurs rangées du plateau. Par exemple, si le plateau comporte m rangées de p oeufs avec m pair, le dispositif peut comporter (m*p)/2 éléments de réorientation organisés en m/2 rangées de p éléments de réorientation. La réorientation des oeufs du plateau se fait alors en deux étapes successives.

Les éléments de réorientation 1 sont fixés par les tiges de liaison 13 sur une plaque apte à se déplacer entre la position basse et la position haute. La fixation des tiges sur la plaque peut être par exemple par vissage. La plaque est par exemple déplacée par des moyens pneumatiques.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention. On peut notamment envisager des variantes avec un nombre différent de barbules ou avec des matériaux différents.

## Revendications

1. Dispositif de réorientation d'oeufs disposés dans les alvéoles (3) creuses ouvertes d'un plateau, ledit dispositif étant destiné à réorienter au moins un oeuf (2) dudit plateau selon un axe sensiblement vertical, ledit dispositif comprenant au moins un élément de réorientation (1) apte à se déplacer entre une position basse et une position haute relativement à l'alvéole comprenant l'oeuf à réorienter, **caractérisé en ce que** ledit élément de réorientation comprend une embase inférieure (10) sur laquelle sont fixées des tiges (11) dressées dont les extrémités supérieures sont écartables les unes par rapport aux autres au contact de l'oeuf à réorienter, les tiges dressées étant destinées à s'interposer, entre l'alvéole et l'oeuf, en position haute, pour amorcer et guider un mouvement de l'oeuf sous l'effet de son poids vers une position sensiblement verticale.

2. Dispositif selon la revendication 1, **caractérisé en ce que** les tiges dressées (11) sont flexibles.

3. Dispositif selon la revendication 1 ou 2, **caractérisé en ce que** l'embase inférieure (10) est réalisée en un matériau flexible ou élastique.

4. Dispositif selon la revendication 1 ou 2, **caractérisé en ce que** l'embase inférieure comprend un mécanisme d'articulation des extrémités inférieures des tiges permettant aux extrémités supérieures de s'écarter lorsqu'un oeuf est en contact avec les tiges.

5. Dispositif selon l'une quelconque des revendications précédentes, **caractérisé en ce que** l'extrémité supérieure des tiges (11) est conformée pour venir au contact avec la coquille de l'oeuf en un ou deux points de manière à réduire les frottements et optimiser le glissement de l'oeuf entre les tiges.

6. Dispositif selon la revendication 5, **caractérisé en ce que** les tiges (11) présentent une boucle (12) à leur extrémité supérieure, les tiges étant au contact de la coquille d'oeuf par l'intermédiaire desdites boucles.

7. Dispositif selon la revendication 5, **caractérisé en ce que** les tiges (11) présentent une boule à leur extrémité supérieure, les tiges étant au contact de la coquille d'oeuf par l'intermédiaire desdites boules.

8. Dispositif selon l'une quelconque des revendications précédentes, **caractérisé en ce que** l'élément de réorientation (1) comporte n tiges (11) avec n≥3, les extrémités inférieures desdites tiges étant disposées et fixées à l'embase inférieure (10) selon un polygone équilatéral.

9. Dispositif selon l'une quelconque des revendications précédentes, **caractérisé en ce que** l'extrémité inférieure des tiges est moulée dans l'embase inférieure.

10. Dispositif selon l'une quelconque des revendications précédentes, **caractérisé en ce que** les tiges sont disposées de façon à former un cône ou un entonnoir une fois que les tiges sont écartées au contact de l'oeuf.

11. Dispositif selon l'une quelconque des revendications précédentes, **caractérisé en ce que**, le dispositif étant destiné à réorienter les oeufs d'un plateau comportant n alvéoles creuses organisées en rangées, il comporte n éléments de réorientation, chaque élément de réorientation étant destiné à réorienter un oeuf du plateau.

## Patentansprüche

1. Vorrichtung zur Neuausrichtung von Eiern, die in den offenen hohlen Zellen (3) einer Schale angeordnet sind, wobei die Vorrichtung dazu bestimmt ist, mindestens ein Ei (2) der Schale gemäß einer im Wesentlichen vertikalen Achse neu auszurichten, umfassend mindestens ein Neuausrichtungselement (1), das geeignet ist, sich zwischen einer unteren Position und einer oberen Position relativ zu der Zelle zu verschieben, die das neu auszurichtende Ei umfasst,
**dadurch gekennzeichnet, dass** das Neuausrichtungselement eine untere Basis (10) umfasst, an der aufgestellte Stäbe (11) befestigt sind, deren obere Enden voneinander in Kontakt mit dem neu auszurichtenden Ei aufspreizbar sind, wobei die aufgestellten Stäbe dazu bestimmt sind, sich zwischen die Zelle und das Ei in der oberen Position zu positionieren, um eine Bewegung des Eis unter der Einwirkung seines Gewichts in eine im Wesentlichen vertikale Position einzuleiten und zu führen.

2. Vorrichtung nach Anspruch 1,
**dadurch gekennzeichnet, dass** die aufgestellten Stäbe (11) flexibel sind.

3. Vorrichtung nach Anspruch 1 oder 2,
**dadurch gekennzeichnet, dass** die untere Basis (10) aus einem flexiblen oder elastischen Material hergestellt ist.

4. Vorrichtung nach Anspruch 1 oder 2,
**dadurch gekennzeichnet, dass** die untere Basis einen Gelenkmechanismus der unteren Enden der Stäbe umfasst, der es den oberen Enden gestattet, sich aufzuspreizen, wenn ein Ei mit den Stäben in Kontakt ist.

5. Vorrichtung nach einem der vorhergehenden Ansprüche,
**dadurch gekennzeichnet, dass** das obere Ende der Stäbe (11) eingerichtet ist, mit der Schale des Eis an einem oder zwei Punkten in Kontakt zu gelangen, um die Reibungen zu reduzieren und das Gleiten des Eis zwischen die Stäbe zu optimieren.

6. Vorrichtung nach Anspruch 5,
**dadurch gekennzeichnet, dass** die Stäbe (11) eine Schlaufe (12) an ihrem oberen Ende aufweisen, wobei die Stäbe mit der Eierschale mittels der Schlaufen in Kontakt gelangen.

7. Vorrichtung nach Anspruch 5,
**dadurch gekennzeichnet, dass** die Stäbe (11) eine Kugel an ihrem oberen Ende aufweisen, wobei die Stäbe mit der Eierschale mittels der Kugeln in Kontakt gelangen.

8. Vorrichtung nach einem der vorhergehenden Ansprüche,
**dadurch gekennzeichnet, dass** das Neuausrichtungselement (1) n Stäbe umfasst, wobei n≥3, wobei die unteren Enden der Stäbe an der unteren Basis (10) gemäß einem gleichseitigen Vieleck angeordnet sind.

9. Vorrichtung nach einem der vorhergehenden Ansprüche,
**dadurch gekennzeichnet, dass** das untere Ende der Stäbe in die untere Basis geformt ist.

10. Vorrichtung nach einem der vorhergehenden Ansprüche,
**dadurch gekennzeichnet, dass** die Stäbe derart angeordnet sind, dass sie einen Kegel oder einen Trichter bilden, sobald die Stäbe in Kontakt mit dem Ei aufgespreizt sind.

11. Vorrichtung nach einem der vorhergehenden Ansprüche,
**dadurch gekennzeichnet, dass**, da die Vorrichtung dazu bestimmt ist, die Eier einer Schale mit n hohlen Zellen, die in Reihen organisiert sind, neu auszurichten, diese n Neuausrichtungselemente umfasst, wobei jedes Neuausrichtungselement dazu bestimmt ist, ein Ei der Schale neu auszurichten.

## Claims

1. Device for reorientation of eggs deposited in the hollow open cells (3) of a tray, said device being intended to reorientate at least one egg (2) from said tray along a substantially vertical axis, said device comprising at least one reorientation element (1) capable of moving between a low position and a high position with respect to the cell containing the egg to be reorientated, **characterised in that** said reorientation element comprises a lower seat (10) on which upright rods (11) are fixed, the upper ends of said rods being able to spread out with respect to each other on contact with the egg to be reorientated, the upright rods being intended to interpose themselves between the cell and the egg, in the high position, so as to damp and guide a movement of the egg under the effect of its weight to a substantially vertical position.

2. Device according to claim 1, **characterised in that** the upright rods (11) are flexible.

3. Device according to claim 1 or 2, **characterised in that** the lower seat (10) is made from a flexible or elastic material.

4. Device according to claim 1 or 2, **characterised in that** the lower seat comprises a mechanism for articulating the lower ends of the rods, enabling the upper ends to spread out with respect to each other when an egg is in contact with the rods.

5. Device according to any one of the previous claims, **characterised in that** the upper end of the rods (11) is shaped to come into contact with the shell of the egg at one or two points, so as to reduce friction and optimise the sliding of the egg between the rods.

6. Device according to claim 5, **characterised in that** the rods (11) have a loop (13) at their upper end, the rods being in contact with the egg shell through said loops.

7. Device according to claim 5, **characterised in that** the rods (11) have a ball at their upper end, the rods being in contact with the egg shell through said balls.

8. Device according to any one of the previous claims, **characterised in that** the reorientation element (1) comprises n rods (11) where n≥3, the lower ends of said rods being positioned and fixed to the lower seat (10) according to an equilateral polygon.

9. Device according to any one of the previous claims, **characterised in that** the lower end of the rods is moulded into the lower seat.

10. Device according to any one of the previous claims, **characterised in that** the rods are positioned such as to form a cone or funnel, once the rods have spread out with respect to each other on contact with the egg.

11. Device according to any one of the previous claims, **characterised in that**, the device being intended to reorientate the eggs of a tray comprising n hollow cells organised into rows, it comprises n reorientation elements, each reorientation element being intended to reorientate one egg from the tray.
